(19) Europäisches Patentamt
European Patent Office
Office européen des brevets

(11) **EP 2 873 743 A1**

(12) **EUROPÄISCHE PATENTANMELDUNG**

(43) Veröffentlichungstag:
20.05.2015 Patentblatt 2015/21

(51) Int Cl.:
***C22B 7/04*** *(2006.01)*

(21) Anmeldenummer: 13192773.3

(22) Anmeldetag: **13.11.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **TARTECH eco industries AG**
**10117 Berlin (DE)**

(72) Erfinder: **Gronholz, Claus**
**22949 Ammersbek (DE)**

(74) Vertreter: **Stenger, Watzke & Ring**
**Intellectual Property**
**Am Seestern 8**
**40547 Düsseldorf (DE)**

(54) **Verfahren zur mechanischen Abtrennung von Metallen aus metallhaltigen Schlacken**

(57) Verfahren zur mechanischen Abtrennung von Metallen aus einer metallhaltigen Schlacke, dadurch gekennzeichnet, dass in einem ersten Verfahrensschritt der Feuchtegehalt der zu verarbeitenden Schlacke bestimmt und in einem zweiten Verfahrensschritt die Zufuhrmenge der zu verarbeitenden Schlacke an den zuvor bestimmten Feuchtegehalt angepasst wird.

EP 2 873 743 A1

**Beschreibung**

Verfahren zur mechanischen Abtrennung von Metallen aus metallhaltigen Schlacken bei dem eine Zufuhrmenge an zu verarbeitender Schlacke einer Verarbeitungsanlage zugeführt wird.

Es ist aus dem Stand der Technik bekannt, Müll und sonstige Abfälle thermisch zu verwerten. Dabei entstehen Schlacke- und Aschereste, die typischerweise deponiert werden.

Die der thermischen Müllverwertung entstammenden Schlacke- und Aschereste können je nach Ausgangszusammensetzung mehr oder weniger reich an seltenen und damit wertvollen Stoffen und Materialien wie z. B. Edelmetallen oder seltenen Erden sein. Eine Rückgewinnung derartiger Stoffe ist daher von besonderem wirtschaftlichem Interesse.

Verfahren zur Rückgewinnung sind an sich aus dem Stand der Technik gut bekannt, z.B. aus der DE 20 2005 017 952 U1.

Die Rückgewinnungsquote der Metalle, insbesondere kleiner Metallpartikel, ist hierbei in hohem Maße abhängig vom Feuchtegehalt der zu verarbeitenden Schlacke. Es gilt: Je höher der Feuchtegehalt der Schlacke, desto schwieriger wird die Abtrennung der wertvollen Metalle. Insbesondere die für eine hocheffiziente Metallrückgewinnung erforderlichen Siebschnitte in die Korngruppen 0/2 mm, 2/8 mm und 8/15 mm zeigen eine starke Abhängigkeit vom Feuchtegehalt der Schlacke, da die jeweiligen Siebdecks bei zu hohem Feuchtegehalt und zu hoher Zufuhrmenge überfahren werden, was zu einer unerwünscht starken Verunreinigung der jeweiligen Korngruppe führt.

Die Aufgabe der Erfindung ist es daher, ein Verfahren vorzuschlagen, mit welchem die genannten Nachteile vermieden und die mechanische Abtrennung von Metallen aus metallhaltigen Schlacken weiter verbessert wird.

Zur Lösung dieser Aufgabe wird eine Erfindung mit den Merkmalen gemäß Anspruch 1 vorgeschlagen. Weitere Vorteile und Merkmale ergeben sich aus den Unteransprüchen.

Der Vorteil des erfindungsgemäßen Verfahrens besteht darin, dass die Zufuhrmenge der zu verarbeitenden Schlacke in Abhängigkeit des Feuchtegehalts der Schlacke gesteuert werden kann. Hierdurch wird eine Verunreinigung der für eine hocheffiziente Metallrückgewinnung wichtigen Korngruppen 0/2 mm, 2/8 mm und 8/15 mm durch überfahren der jeweiligen Siebdecks infolge einer zu hohen Zufuhrmenge in vorteilhafter Weise verhindert. Das erfindungsgemäße Verfahren ermöglicht somit erstmals eine effiziente Rückgewinnung dieser Korngrößen.

Gemäß einem bevorzugten Merkmal der Erfindung wird eine Probe der zu verarbeitenden Schlacke zunächst einer Feuchtemesseinheit zur Bestimmung des Feuchtegehalts zugeführt. Die Probenmasse beträgt hierbei zwischen 10 und 50 g, bevorzugterweise 20 - 40 g und idealerweise 30 g. Durch die Wahl der geeigneten Probenmasse ist sichergestellt, dass der Feuchtegehalt exakt bestimmt werden kann, aber dabei keine größeren Mengen an metallhaltiger Schlacke verschwendet wird.

Die Bestimmung des Feuchtegehalts der Probe erfolgt in bevorzugter Weise über die Ermittlung des Masseverlustes des in der Probe enthaltenen verdunstenden Wassers. Die Feuchtemesseinheit verfügt daher in bevorzugterweise über eine Heizeinrichtung und über eine Wägeeinrichtung. Eine solche Feuchtemesseinheit ermöglicht es in vorteilhafter Weise den Masseverlust der Verdunstungsfeuchte bei frei wählbaren Temperaturen zu ermitteln. In besonders bevorzugter Weise verfügt die Feuchtemesseinheit darüber hinaus über eine Temperatursteuerungseinheit, wodurch der Masseverlust durch voreinstellbare Temperaturprogramme besonders detailliert bestimmt werden kann.

Schlacken, wie sie im erfindungsgemäßen Verfahren für die Metallrückgewinnung verwendet werden, weisen in der Regel drei Arten von Restwasser auf, deren Summe die Gesamtfeuchte bilden. Im Wesentlichen sind dies

a) chemisch gebundenes Wasser,

b) physikalisch gebundenes Wasser und

c) Adsorptionswasser an der Stoffoberfläche.

Der Anmelder hat nun in überraschender Weise herausgefunden, dass chemisch- und physikalisch gebundenes Wasser unschädlich für die Trenneigenschaften der Schlacke ist und sich lediglich Adsorptionswasser negativ auf die Trenneigenschaften der Schlacke auswirkt. Für die Festlegung der Zufuhrmenge ist der Anteil an chemisch- und physikalisch gebundenem Wasser daher unerheblich und muss nicht berücksichtigt werden.

Da aus dem Stand der Technik bekannte Messvorrichtungen zur Bestimmung des Feuchtegehalts von Schüttgut, wie z.B. Trockenwaagen, nicht zwischen den einzelnen Wasserarten a) - c) differenzierend messen können, war eine reine Bestimmung des Adsorptionswassers bisher nicht möglich.

Gemäß einem weiteren bevorzugten Merkmal der Erfindung wird die Probe der Schlacke hierzu für eine frei wählbare Zeitspanne auf eine im Wesentlichen konstante Temperatur erhitzt. Hierdurch wird eine gleichmäßige Ausgasung des Wassers sichergestellt und in vorteilhafter Weise Messfehler minimiert. Die im Wesentlichen konstante Temperatur liegt bevorzugterweise beim oder oberhalb des Siedepunkts von Wasser, wodurch die Ausgasung der Feuchte in bevorzugterweise beschleunigt wird. Bevorzugt beträgt die im Wesentlichen konstante Temperatur hierbei 100 - 110 °C und idealerweise 105 °C, wodurch eine beschleunigte, aber zugleich gleichmäßige Ausgasung der Probe erreicht wird.

Die Zeitspanne für eine Bestimmung des Feuchtegehalts mit beliebiger Genauigkeit beträgt bevorzugterweise 5 - 20 min, besonders bevorzugt 8 - 15 min und idealerweise 10 min. Durch diese besonders bevorzugte Zeitspanne wird eine exzellente Genauigkeit bei der Bestimmung des Feuchtegehalts bei gleichzeitig zeitsparender Messung erreicht.

Die Bestimmung des Feuchtegehalts der Probe erfolgt gemäß einer bevorzugten Verfahrensführung jeweils nach einem Zeitintervall von 30 - 90 Sekunden. Auf diese Weise kann der Masseverlust der Restfeuchte in Abhängigkeit der Verdunstungszeit detailliert bestimmt werden. Besonders bevorzugt beträgt das Zeitintervall 45 - 75 Sekunden und idealerweise 60 Sekunden.

In bevorzugter Weise werden die jeweiligen Messwerte des Feuchtegehalts für jedes Zeitintervall von der Feuchtemesseinheit an eine Steuerungseinheit übermittelt. Sowohl die Feuchtemesseinheit als auch die Steuerungseinheit weisen zu diesem Zweck einen Anschluss zur Datenübertragung, insbesondere LAN, W-LAN, Bluetooth oder dergleichen, auf.

Durch die Übermittlung der Messdaten von der Feuchtemesseinheit zur Steuerungseinheit wird in erfindungsgemäßer Weise die Steuerung der Zufuhrmenge in Abhängigkeit des Feuchtegehalts ermöglicht.

Gemäß einer alternativen Ausgestaltung der Erfindung ist die Feuchtemesseinheit in die Steuerungseinheit integriert, wodurch eine Übertragung der Messwerte durch interne Datenübertragung gewährleistet ist und das erfindungsgemäße Verfahren in vorteilhafter Weise durch den Verzicht auf eine externe Datenübertragung vereinfach wird.

Gemäß einer bevorzugten Verfahrensführung, berechnet die Steuereinheit Differenzen aus den Messwerten ausgewählter Zeitintervalle und bildet einen Mittelwert dieser Differenzen, welcher für die Festlegung der Zufuhrmenge verwendet wird. Durch diesen bevorzugten Algorithmus wird der Anteil an Adsorptionswasser im Feuchtegehalt mit hoher Genauigkeit bestimmt, wodurch das Verfahren noch weiter optimiert wird, da die chemisch- und physikalisch gebundenen Wasseranteile nicht mitberücksichtigt werden und die Zufuhrmenge der zu verarbeitenden Schlacke daher in vorteilhafter Weise erhöht werden kann.

Besonders genau kann der Anteil des Adsorptionswassers bestimmt werden, wenn, wie bevorzugterweise vorgesehen ist, der Mittelwert aus Differenzen aus Messwerten von einander nachfolgenden Zeitintervallen gebildet wird. Besonders bevorzugt ist hierbei, dass wenigstens fünf Differenzen zur Bildung des Mittelwertes herangezogen werden, um eine besonders genaue Bestimmung des Adsorptionswassers des Feuchtegehalts und eine daraus resultierende besonders genaue Festlegung der Zufuhrmenge zu erreichen.

In ganz besonders bevorzugter Weise wird die Zufuhrmenge durch folgende Formel festgelegt:

$$M = \frac{C_O \cdot 200\frac{t}{h}}{[(F_{6min} - F_{5min}) + (F_{7min} - F_{6min}) + (F_{8min} - F_{7min}) + (F_{9min} - F_{8min}) + (F_{10min} - F_{9min})]/5}$$

M:     Zufuhrmenge
$C_O$:     Anlagenspezifische Konstante
$F_{x\,min}$:     Messwerte des Feuchtegehalts bei x min.

Gemäß einem weiteren bevorzugten Merkmal der Erfindung wird die durch die Steuerungseinheit festgelegte Zufuhrmenge in einem dritten Verfahrensschritt einer Verarbeitungsanlage zugeführt. Durch die Verknüpfung von Steuerungseinheit und Verarbeitungsanlage kann die Zufuhrmenge in einfacher Weise in Abhängigkeit des Feuchtegehalts der zu verarbeitenden Schlacke reguliert werden. Dies geschieht bevorzugterweise vollautomatisch, indem die Zufuhr der Zufuhrmenge an die Verarbeitungsanlage von der Steuerungseinheit gesteuert wird.

Dies erfolgt gemäß einem besonders bevorzugten Merkmal der Erfindung mittels Bandwaagen und/oder Dosierrinnen. Es ist somit stets gewährleistet, dass den einzelnen Siebdecks die für eine Metallrückgewinnung optimale Zufuhrmenge an Schlacke zugeführt wird, um eine hocheffiziente und hochreine Auftrennung der Metalle in die jeweiligen Korngruppen erreichen.

**Patentansprüche**

1.  Verfahren zur mechanischen Abtrennung von Metallen aus einer metallhaltigen Schlacke, bei dem eine Zufuhrmenge an zu verarbeitender Schlacke einer Verarbeitungsanlage zugeführt wird, **dadurch gekennzeichnet, dass** in einem ersten Verfahrensschritt der Feuchtegehalt der zu verarbeitenden Schlacke bestimmt und in einem zweiten Verfahrensschritt die Zufuhrmenge der zu verarbeitenden Schlacke an den zuvor bestimmten Feuchtegehalt angepasst wird.

2. Verfahren nach Anspruch 1, **dadurch gekennzeichnet, dass** der Feuchtegehalt einer Probe der Schlacke bestimmt wird.

3. Verfahren nach Anspruch 2, **dadurch gekennzeichnet, dass** die Probe der Schlacke auf konstante Temperatur erhitzt wird, die oberhalb des Siedepunktes von Wasser liegt.

4. Verfahren nach Anspruch 3, **dadurch gekennzeichnet, dass** der Feuchtegehalt jeweils nach einem Zeitintervall von 30 - 90 Sekunden gemessen wird.

5. Verfahren nach Anspruch 4, **dadurch gekennzeichnet, dass** die einzelnen Messwerte des Feuchtegehalts an eine Steuerungseinheit übermittelt werden.

6. Verfahren nach Anspruch 5, **dadurch gekennzeichnet, dass** Differenzen aus Messwerten ausgewählter Zeitintervalle berechnet werden und, dass ein Mittelwert dieser Differenzen bestimmt wird, welcher für die Festlegung der Zufuhrmenge verwendet wird.

7. Verfahren nach einem der vorhergehenden Ansprüche, **dadurch gekennzeichnet, dass** die durch die Steuerungseinheit festgelegte Zufuhrmenge der zu verarbeitenden Schlacke in einem dritten Verfahrensschritt der Verarbeitungsanlage zugeführt wird.

8. Verfahren nach Anspruch 9, **dadurch gekennzeichnet, dass** die Steuerung der Zufuhrmenge durch die Steuerungseinheit mittels Bandwaagen und/oder Dosierrinnen erfolgt.

Europäisches Patentamt
European Patent Office
Office européen des brevets

**EUROPÄISCHER RECHERCHENBERICHT**

Nummer der Anmeldung

EP 13 19 2773

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | UA 11 989 U (SUSCHENKOV YURII YEHOROVYCH [UA]; CHUHUNOV YURII DAVYDOVYCH [UA]) 16. Januar 2006 (2006-01-16) * das ganze Dokument * ----- | 1-8 | INV. C22B7/04 |
| X | JP 2008 025934 A (JFE STEEL KK) 7. Februar 2008 (2008-02-07) * das ganze Dokument * ----- | 1-8 | |
| X | WO 2011/107124 A1 (LOESCHE GMBH [DE]; GEROLD CARSTEN [DE]; DARDEMANN FRANK [DE]; LANGEL J) 9. September 2011 (2011-09-09) * das ganze Dokument * ----- | 1-8 | |
| A | JP 2006 298667 A (UBE INDUSTRIES) 2. November 2006 (2006-11-02) * Absatz [0036]; Abbildungen 1,2 * ----- | 2-5 | |
| A | US 2008/148902 A1 (GILLIS JAMES M [US] ET AL) 26. Juni 2008 (2008-06-26) * Absätze [0016], [0017]; Abbildung 1 * ----- | 1-8 | RECHERCHIERTE SACHGEBIETE (IPC) C22B |

Der vorliegende Recherchenbericht wurde für alle Patentansprüche erstellt

| Recherchenort | Abschlußdatum der Recherche | Prüfer |
|---|---|---|
| München | 4. April 2014 | Juhart, Matjaz |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

                                              

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 13 19 2773

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-04-2014

| Im Recherchenbericht angeführtes Patentdokument | | Datum der Veröffentlichung | Mitglied(er) der Patentfamilie | | Datum der Veröffentlichung |
|---|---|---|---|---|---|
| UA 11989 | U | 16-01-2006 | KEINE | | |
| JP 2008025934 | A | 07-02-2008 | KEINE | | |
| WO 2011107124 | A1 | 09-09-2011 | AU | 2010347572 A1 | 04-10-2012 |
| | | | CA | 2791123 A1 | 09-09-2011 |
| | | | CN | 102822355 A | 12-12-2012 |
| | | | EP | 2542704 A1 | 09-01-2013 |
| | | | JP | 2013522455 A | 13-06-2013 |
| | | | KR | 20120139731 A | 27-12-2012 |
| | | | TW | 201130563 A | 16-09-2011 |
| | | | US | 2012325055 A1 | 27-12-2012 |
| | | | WO | 2011107124 A1 | 09-09-2011 |
| JP 2006298667 | A | 02-11-2006 | KEINE | | |
| US 2008148902 | A1 | 26-06-2008 | US | 2008148902 A1 | 26-06-2008 |
| | | | WO | 2008079537 A1 | 03-07-2008 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- DE 202005017952 U1